# EUROPEAN PATENT APPLICATION

(11) **EP 3 358 543 A1**
(43) Date of publication of application: **08.08.2018**
(21) Application number: 16850580.8
(22) Date of filing: 05.09.2016
(51) Int. Cl.: G08G 1/015, G06T 1/00, G08G 1/04

(54) **VEHICLE MODEL IDENTIFICATION DEVICE, VEHICLE MODEL IDENTIFICATION SYSTEM COMPRISING SAME, AND VEHICLE MODEL IDENTIFICATION METHOD**

(30) Priority: 30.09.2015 JP 2015193258
(71) Applicant: Panasonic Intellectual Property Management Co., Ltd., Osaka-shi, Osaka 540-6207 (JP)
(72) Inventor: UETA, Daisuke, Chuo-ku, Osaka-shi Osaka 540-6207 (JP)
(74) Representative: Eisenführ Speiser
(86) International application number: PCT/JP2016/004034
(87) International publication number: WO 2017/056399

(57) **Abstract**

To allow identifying or estimating a vehicle model of a vehicle even in a case where it is impossible to identify the vehicle model on the basis of a feature amount of at least a portion of a vehicle body of the vehicle, a vehicle model identification device (2) of the present disclosure includes a storage unit (14) that stores a first database in which a feature amount of at least a portion of a vehicle body of each of a plurality of vehicle models, for each of the vehicle models is stored, and a second database in which a feature amount of a component which is included in at least the portion of the vehicle body of each of the vehicle models is stored, and a processor (15) that performs a first vehicle model identification process of identify the vehicle model of the vehicle with reference to the first database on the basis of the feature amount of at least the portion of the vehicle body which is extracted from a captured image, and a second vehicle model identification process of identifying the vehicle model of the vehicle with reference to the second database on the basis of the feature amount of the component which is extracted from the captured image.

## Description

### TECHNICAL FIELD

The present disclosure relates to a vehicle model identification device, a vehicle model identification system including the vehicle model identification device, and a vehicle model identification method which identify a vehicle model of a vehicle on the basis of a captured image of the vehicle which is captured by an imaging device.

### BACKGROUND ART

In the related art, specifying each of vehicles is performed by a number of a number plate. Even in addition to the number of the number plate, in a case where a vehicle model of a vehicle is determined, it is possible to specify the each of the vehicles in more detail. The vehicle model described here is a name (common name) given to a vehicle for each kind of the vehicle by a manufacturer. For example, in a case where each of vehicles is specified in order to obtain security or the like in an entrance gate of a parking lot, a facility, or the like, determining the vehicle model of the vehicle as well as the number of the number plate of the vehicle enables specifying the vehicle in more detail, and thus is beneficial.

Various techniques for identifying a vehicle model of a vehicle on the basis of a captured image of the vehicle which is captured by an imaging device are proposed (for example, PTL 1). In the related art of PTL 1, for each kind of the vehicle, a vehicle model of the vehicle thereof and a feature amount of a front portion of the vehicle thereof are matched and registered in a database, and a feature amount of a front portion extracted from the captured image and the feature amount of the front portion registered in the database are compared with each other, to identify the vehicle model.

### Citation List

### Patent Literature

PTL 1: Japanese Patent Unexamined Publication No. 2010-102466

### SUMMARY OF THE INVENTION

In the related art of PTL 1 described above, there is a problem that it is impossible to identify a vehicle model of a vehicle of which vehicle model identification data which is on the basis of a feature (for example, an appearance such as a shape) of a front portion of the vehicle, that is at least a portion of a vehicle body of the vehicle is not registered in a database. In particular, in a case where a new model vehicle is released, until vehicle model identification data is registered in a database on the basis of a feature of at least a portion (for example, front portion or rear portion) of a vehicle body of the new model vehicle, it is impossible to identify a vehicle model of the new model vehicle.

The present disclosure is made in consideration of the above problems of the related art, and a main object of the present disclosure is to provide a vehicle model identification device, a vehicle model identification system including the same, and a vehicle model identification method which is capable of identifying or estimating a vehicle model of a vehicle even in a case where it is impossible to identify the vehicle model on the basis of a feature of at least a portion of a vehicle body of the vehicle.

According to the present disclosure, there is provided a vehicle model identification device which identifies a vehicle model of a vehicle on the basis of a captured image of the vehicle which is captured by an imaging device. The vehicle model identification device includes a first database that stores information on a feature of at least a portion of a vehicle body of each of a plurality of vehicle models, for each of the vehicle models, a second database that stores information on a feature of a component which is included in at least the portion of the vehicle body of each of the vehicle models, for each of the vehicle models, and a processor that performs a first vehicle model identification process of extracting the information on the feature of at least the portion of the vehicle body of the vehicle from the captured image and identifying the vehicle model of the vehicle with reference to the first database on the basis of the extracted information on the feature of at least the portion of the vehicle body, and a second vehicle model identification process of extracting the information on the feature of the component which is included in at least the portion of the vehicle body from the captured image and identifying the vehicle model of the vehicle with reference to the second database on the basis of the extracted information on the feature of the component. At least, in a case where identifying the vehicle model of the vehicle by the first vehicle model identification process is impossible, the processor performs the second vehicle model identification process.

According to the present disclosure, it is possible to identify or estimate a vehicle model of a vehicle even in a case where it is impossible to identify the vehicle model on the basis of a feature of at least a portion of a vehicle body of the vehicle.

### BRIEF DESCRIPTION OF DRAWINGS

FIG. 1 is a block diagram illustrating a hardware configuration for realizing a vehicle model identification system of the present disclosure.
FIG. 2A is a diagram illustrating a captured image of a vehicle which is captured in an approximate front view by a camera (captured image).
FIG. 2B is a diagram illustrating an image of a front portion of the vehicle, which is extracted from the captured image of FIG. 2A.
FIG. 3A is a diagram illustrating an example of a first database.
FIG. 3B is a diagram illustrating an example of a second database.
FIG. 4 is a flowchart illustrating a flow of a vehicle model identification process by a processor.
FIG. 5A is a diagram illustrating an example in which a vehicle model corresponding to a component having the highest score is set as an identification result.
FIG. 5B is a diagram illustrating an example in which a vehicle model corresponding to a component having a score greater than a predetermined threshold value is set as an identification result.
FIG. 5C is a diagram illustrating an example in which vehicle models are identified for each kind of components, and a vehicle model corresponding to a component having the highest score, for each kind of components is set as an identification result.
FIG. 5D is a diagram illustrating an example in which in a case where manufacturers corresponding to components having the first to third highest scores are the same, the manufacturers are set as an identification result.

### DESCRIPTION OF EMBODIMENT

According to a first disclosure for resolving the above described problems, there is provided a vehicle model identification device which identifies a vehicle model of a vehicle on the basis of a captured image of the vehicle which is captured by an imaging device. The vehicle model identification device includes a first database that stores information on a feature of at least a portion of a vehicle body of each of a plurality of vehicle models, for each of the vehicle models, a second database that stores information on a feature of a component which is included in at least the portion of the vehicle body of each of the vehicle models, for each of the vehicle models, and a processor that performs a first vehicle model identification process of extracting the information on the feature of at least the portion of the vehicle body of the vehicle from the captured image and identifying the vehicle model of the vehicle with reference to the first database on the basis of the extracted information on the feature of at least the portion of the vehicle body, and a second vehicle model identification process of extracting the information on the feature of the component which is included in at least the portion of the vehicle body from the captured image and identifying the vehicle model of the vehicle with reference to the second database on the basis of the extracted information on the feature of the component. At least in a case where identifying the vehicle model of the vehicle by the first vehicle model identification process is impossible, the processor performs the second vehicle model identification process.

With the vehicle model identification device of the first disclosure, even in a case where it is impossible to identify the vehicle model of the vehicle body by the vehicle model identification process (first vehicle model identification process) on the basis of the feature of at least the portion of the vehicle body of the vehicle, it is possible to identify the vehicle model of the vehicle by the vehicle model identification process (second vehicle model identification process) on the basis of the feature of the component which is included in at least the portion of the vehicle body of the vehicle. For example, even for a vehicle of which vehicle model identification data is not registered in a database on the basis of a feature of at least a portion of a vehicle body, such as a new model vehicle, it is possible to identify the vehicle model of the vehicle thereof. In addition, even in a case where it is possible to identify the vehicle model of the vehicle body the first vehicle model identification process, the second vehicle model identification process may be performed. Therefore, it is possible to increase precision of the vehicle model identification.

According to a second disclosure, in the first disclosure, the information on the feature of the component is a feature amount of the component.

With vehicle model identification device of the second disclosure, a processor may simply perform the first or second vehicle model identification process with high precision, by using at least the portion of the vehicle body or the feature amount of the component.

According to a third disclosure, in the second disclosure, a similarity between a feature amount of the component which is extracted from the captured image and the feature amount of the component which is stored in the second database is calculated, and the vehicle model of the vehicle is identified with reference to the second database on the basis of the calculated similarity.

With the vehicle model identification device of the third disclosure, a processor may simply perform the second vehicle model identification process with high precision, by using the similarity.

According to a fourth disclosure, in the third disclosure, in the second vehicle model identification process, a vehicle model corresponding to a component of which the similarity is the highest among the components stored in the second database, is set as an identification result.

With the vehicle model identification device of the fourth disclosure, it is possible to identify the vehicle model of the vehicle, on the basis of the feature amount of the component which is included in at least the portion of the vehicle body of the vehicle.

According to a fifth disclosure, in the third disclosure, in the second vehicle model identification process, a vehicle model corresponding to a component of which the similarity is greater than a predetermined threshold value among the components stored in the second database, is set as an identification result.

With the vehicle model identification device of the fifth disclosure, it is possible to identify a vehicle model of which possibility of matching with a vehicle is high, on the basis of the feature amount of the component which is included in at least the portion of the vehicle body of the vehicle. Therefore, it is possible to estimate the vehicle model of the vehicle, on the basis of the identification result.

According to a sixth disclosure, in the third disclosure, in the second vehicle model identification process, the vehicle model for each of the components is identified, and a vehicle model corresponding to a component of which the similarity is the highest among the components stored in the second database, is set as an identification result for each of the components.

With the vehicle model identification device of the sixth disclosure, it is possible to identify the vehicle model for each of the components, on the basis of the feature amount of the component which is included in at least the portion of the vehicle body of the vehicle. Therefore, it is possible to estimate the vehicle model of the vehicle, on the basis of the identification result for each component.

According to a seventh disclosure, in the third disclosure, the second database further stores a manufacturer of the vehicle model having the component, and in the second vehicle model identification process the manufacturer of the vehicle model having the component for each of the components is identified, and in a case where the number of the manufacturers of the vehicle model which is identified for each of the components is equal to or greater than a predetermined number, a name of the manufacturers of the vehicle model is set as an identification result.

With the vehicle model identification device of the seventh disclosure, it is possible to identify the manufacturer of the vehicle model having the component of the vehicle, on the basis of the feature amount of the component which is included in at least the portion of the vehicle body of the vehicle. Therefore, even in a case where it is impossible to identify the vehicle model of the vehicle, it is possible to identify the manufacturer of the vehicle model having the component of the vehicle.

According to an eighth disclosure, there is provided a vehicle model identification system including the vehicle model identification device of any one of the first to seventh disclosures, and an imaging device that images a vehicle.

According to a ninth disclosure, there is provided a vehicle model identification method of identifying a vehicle model of a vehicle on the basis of a captured image of the vehicle which is captured by an imaging device. The vehicle model identification method includes a step of preparing a first database that stores information on a feature of at least a portion of a vehicle body of each of a plurality of vehicle models, for each of the vehicle models, and a second database that stores information on a feature of a component which is included in at least the portion of the vehicle body of each of the vehicle models, for each of the vehicle models, a step of extracting the information on the feature of at least the portion of the vehicle body of the vehicle from the captured image and identifying the vehicle model of the vehicle with reference to the first database on the basis of the extracted information on the feature of at least the portion of the vehicle body, and a step of extracting the information on the feature of the component which is included in at least the portion of the vehicle body from the captured image and identifying the vehicle model of the vehicle with reference to the second database on the basis of the extracted information on the feature of the component, at least in a case where identifying the vehicle model of the vehicle by the first vehicle model identification process is impossible.

Hereinafter, an exemplary embodiment of the present disclosure will be described with reference to drawings.

A vehicle model identification system according to the present disclosure is system for identifying a vehicle model of a vehicle with reference to a database in which vehicle model identification data is stored in advance, on the basis of a captured image of the vehicle, which is captured by an imaging device. For example, it is possible to use the vehicle model identification system for security or the like at an entrance gate of a parking lot, a facility, or the like. Hereinafter, a case where the vehicle model identification system according to the present disclosure is applied to an entrance gate of a parking lot will be described.

In the present exemplary embodiment, a front portion (a front side portion of a vehicle body) of the vehicle body is used as at least a portion of the vehicle body. However, at least the portion of the vehicle body is not limited thereto, and may be a rear portion (a rear side portion), a side portion (a side part), a top portion (an upper side portion), or other portions of the vehicle body.

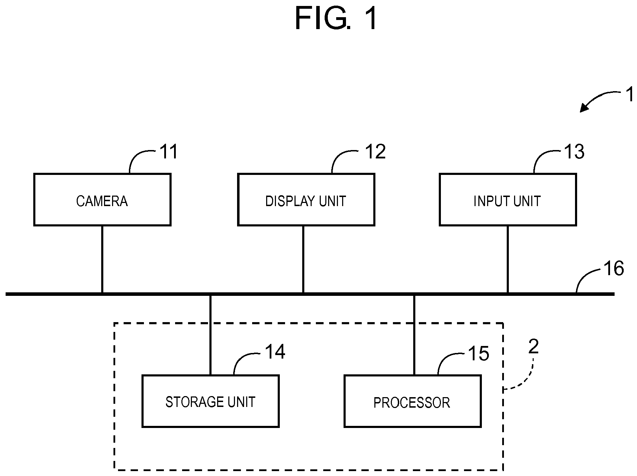

FIG. 1 is a block diagram illustrating a hardware configuration for realizing the vehicle model identification system of the present disclosure. As illustrated in FIG. 1, the hardware configuration for realizing vehicle model identification system 1 of the present disclosure includes camera (an imaging device) 11, display unit 12, input unit 13, storage unit 14, processor 15, and bus 16 for connecting these with each other. Storage unit 14 and processor 15 are configuration elements of vehicle model identification device 2 of the present disclosure.

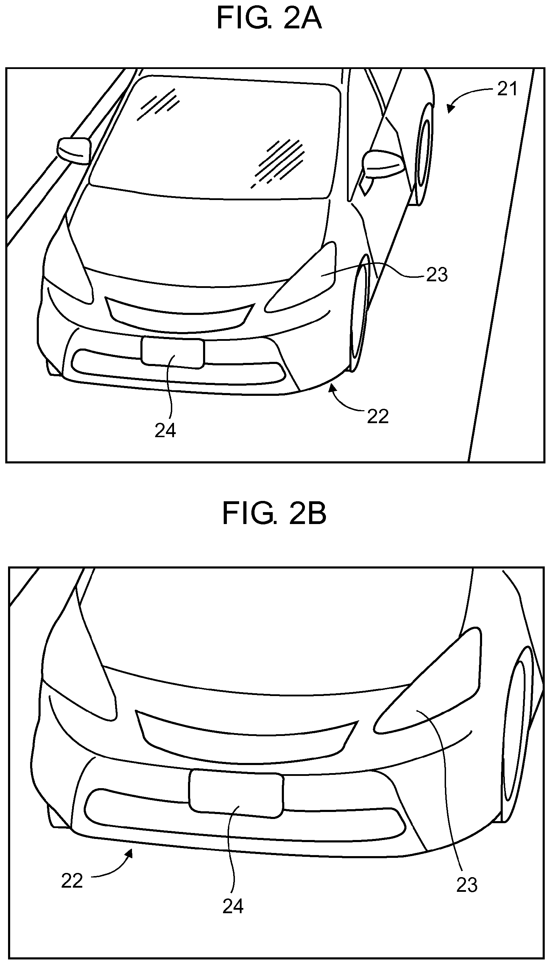

For example, camera 11 is a normal imaging device such as a CCD camera. Camera 11 is disposed in the vicinity of an entrance gate of a parking lot or a facility, and images vehicle 21 that approaches the entrance gate of the parking lot in an approximate front view (an approximate front direction). FIG. 2A is a diagram illustrating an example of a captured image of vehicle 21 which is captured in an approximate front view by camera 11. The captured image which is captured by camera 11 is input to processor 15. As long as camera 11 images vehicle 21 in an approximate front view, a shape, a function, a disposition, the number, and the like thereof are not particularly limited, and various changes are possible.

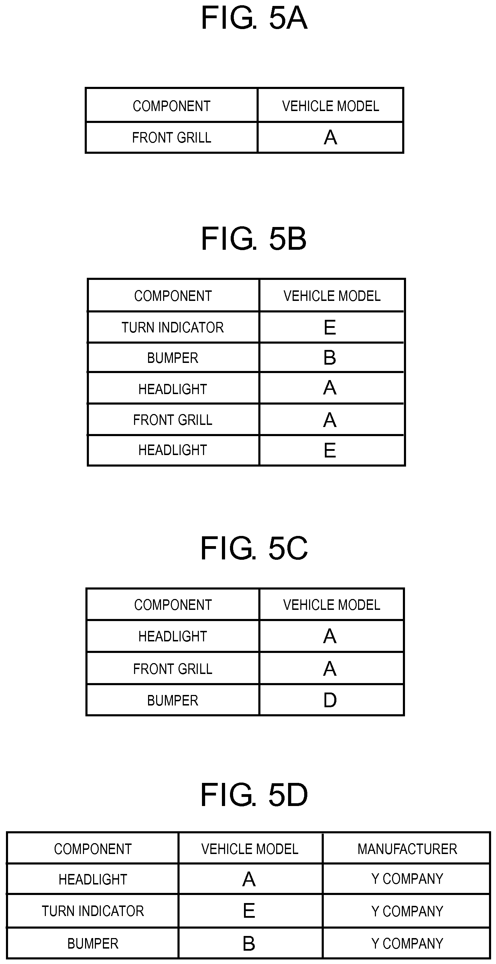

For example, display unit 12 is a normal display device such as a monitor (a display), and is used in displaying the process result of processor 15, or the like. Descriptions of an identification result will be described later, but as illustrated in FIG. 5, the identification result is a vehicle model or a manufacturer of vehicle 21 of an identification target. The process result of processor 15 may be output to an external system such as a security system or a management system, not display unit 12.

For example, input unit 13 is an input device such as a keyboard or a mouse, or various data input device. Input unit 13 is used in that a user inputs various instructions to vehicle model identification device 2, or changes or updates information of a database.

For example, storage unit 14 is a storage device (a storage) such as a ROM or a hard disk, and stores various programs and various pieces of data for realizing each function of vehicle model identification device 2, and a database used in a vehicle model identification process.

A database which stores the vehicle model identification data includes two databases of first database DB1 which stores information on a feature of front portion 22 (refer to FIG. 2B) of vehicle 21 for each of a plurality of vehicle models, and second database DB2 which stores information on component 23 which is included in front portion 22 of vehicle 21 and a feature of the component for each component. The feature described here is, for example, an appearance feature such as a shape. In the present exemplary embodiment, as the information on the feature of front portion 22 and component 23, a feature amount is used. The information on the feature of front portion 22 and component 23 of vehicle 21 is digitized as the feature amount, and is stored in first database DB1 and second database DB2 as a numerical value.

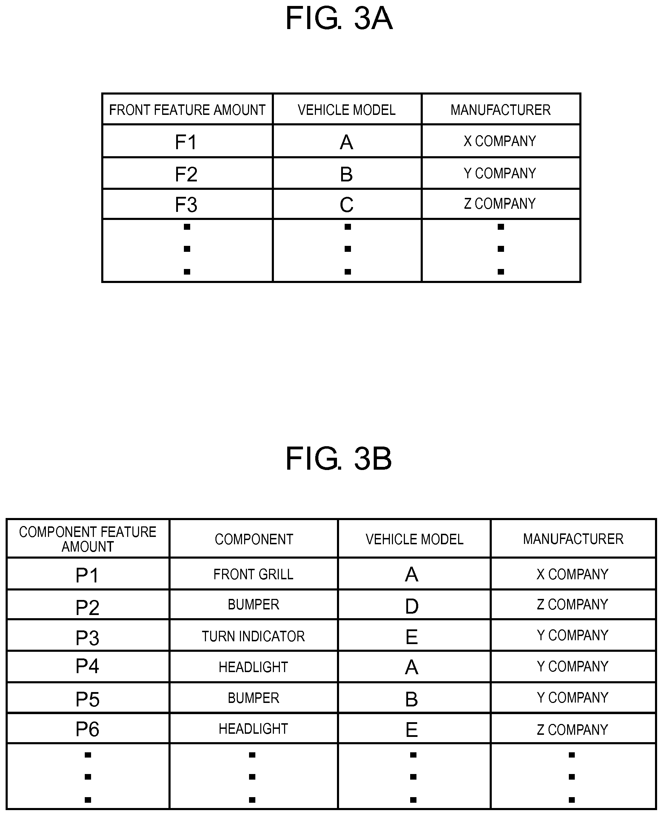

FIG. 3A is a diagram illustrating an example of first database DB1. As illustrated in FIG. 3A, first database DB1 stores the vehicle model, the manufacturer and a feature amount of the front portion of the vehicle (hereinafter, referred to as "front feature amount"), by associating the vehicle model and the manufacturer with the feature amount. As described above, in the present exemplary embodiment, the vehicle model is a name (a common name) which is given to a vehicle by the manufacturer, for each kind of vehicle. The vehicle model is not limited to the name given to the vehicle, and may be information for identifying the vehicle such as a model number. In addition, the vehicle model may be obtained by adding information for classifying and specifying the vehicle to a name given to the vehicle, such as "manufacturing year + name given to vehicle".

In the example of FIG. 3A, a vehicle model "A" and a manufacturer "X company" correspond to a front feature amount "F1", a vehicle model "B" and a manufacturer "Y company" correspond to a front feature amount "F2", and a vehicle model "C" and a manufacturer "Z company" correspond to a front feature amount "F3", respectively, and these are stored. In reality, for example, a front feature F is a numerical value which is expressed in a multi-dimensional floating point vector.

FIG. 3B is a diagram illustrating an example of second database DB2. As illustrated in FIG. 3B, second database DB2 stores a feature amount of the component (hereinafter, referred to as "component feature amount"), the component, the vehicle model, and the manufacturer, in association with the component, the vehicle model, and the manufacturer to the component feature amount. The component is a vehicle part such as a headlight, a front grill, a bumper, or the like.

In the example of FIG. 3B, a component "front grill", a vehicle model "A", and a manufacturer "X company" correspond to a component feature amount "P1", a component "bumper", a vehicle model "D", and a manufacturer "Z company" correspond to a component feature amount "P2", a component "turn indicator", a vehicle model "E", and a manufacturer "Y company" correspond to a component feature amount "P3", a component "headlight", the vehicle model "A", and the manufacturer "Y company" correspond to a component feature amount "P4", the component "bumper", a vehicle model "B", and a manufacturer "Y company" correspond to a component feature amount "P5", and the component "headlight", the vehicle model "E", and the manufacturer "Z company" correspond to a component feature amount "P6", respectively, and these are stored. In reality, for example, a component feature P is a numerical value which is realized in a multi-dimensional floating point vector.

Processor 15 is, for example, a CPU. Processor 15 reads various programs and various pieces of data from storage unit 14 on a RAM which is not illustrated, and performs a process of vehicle model identification device 2 with reference to first database DB1 and second database DB2 which are stored in storage unit 14. Specifically, processor 15 identifies the vehicle model of vehicle 21 which is present in the captured image, on the basis of the captured image (refer to FIG. 2A) which is input from camera 11. In addition, processor 15 generally performs the control of the entire vehicle model identification system 1.

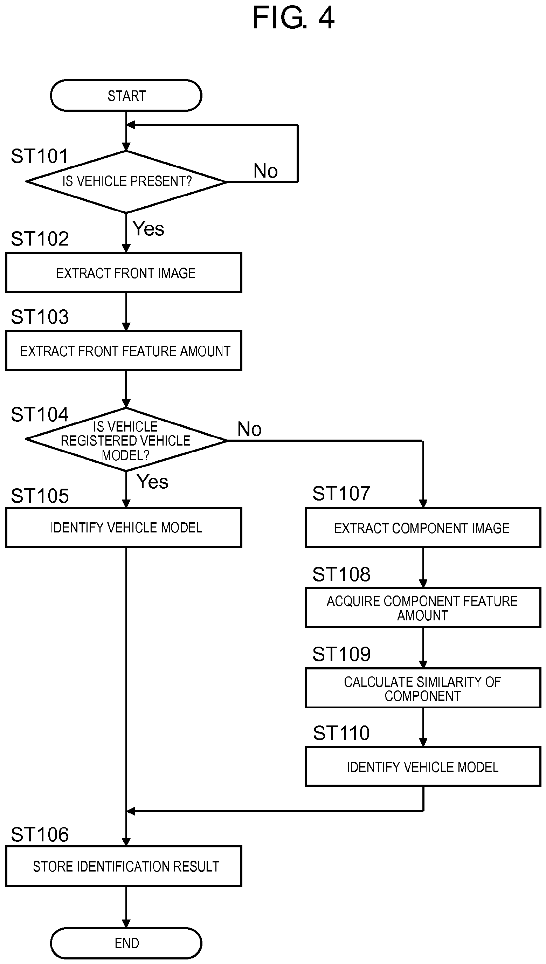

FIG. 4 is a flowchart illustrating a flow of the vehicle model identification process by processor 15. The flow of the vehicle model identification process by processor 15 is described with reference to FIG. 4.

First, it is determined whether vehicle 21 is present or absent in the captured image which is input from camera 11 (step ST101). For example, the presence or absence of vehicle 21 may be determined by a presence or absence of number plate 24 of vehicle 21. In a case where number plate 24 is present, it is determined that vehicle 21 is present in the captured image, and in a case where number plate 24 is absent, it is determined that vehicle 21 is absent in the captured image. For example, the determination of the presence or absence of number plate 24 may be performed by using a template matching of the related art. The determination of the presence or absence of vehicle 21 may be performed by using a vehicle detector which is installed by a previous machine learning for a feature (for example, an appearance such as a shape) of a vehicle, not the presence or absence of number plate 24.

In a case where it is determined that vehicle 21 is present in the captured image (step ST101: Yes), the process proceeds to step ST102, and in a case where it is determined that vehicle 21 is absent in the captured image (step ST101: No), the process returns to step ST101.

In step ST102, an image (hereinafter, referred to as "front image") of front portion 22 of vehicle 21 is extracted from the captured image.
FIG. 2B is a diagram illustrating an example of the front image extracted from the captured image (refer to FIG. 2A). As illustrated in FIG. 2B, in front portion 22, component 23 such as a headlight, a front grill, a bumper, a turn indicator, or a front spoiler is included (in FIG. 2B, a reference numeral is given to only the headlight).

The extraction of the front image may be performed by using a known method of the related art. For example, the extraction of the front image may be performed by cutting a region of a predetermined range from the captured image, on the basis of a position of number plate 24 of vehicle 21 in the captured image. In this case, a region of a predetermined range of the vicinity of the number plate 24 is regarded as a region of front portion 22 of vehicle 21. In addition, the extraction of the front image may be performed by using a front detector which is installed by a previous machine learning for a feature (for example, an appearance such as a shape) of the front portion, not the position of number plate 24.

Then, a feature amount (hereinafter, referred to as "front feature amount") of front portion 22 of vehicle 21 is acquired from the front image (step ST103). For example, the acquisition of the front feature amount may be performed by using a known technique of a local feature amount of the related art, such as Dense Scale Invariant Feature Transform (Dense SIFT) or Histograms of Oriented Gradients (HOG).

Next, it is determined whether the vehicle model of vehicle 21 is registered in first database DB1 or not, on the basis of the front feature amount (step ST104). Specifically, a likelihood in which vehicle 21 is the vehicle model registered in first database DB1 is obtained, on the basis of the front feature amount which is acquired from the front image, and it is determined whether the obtained likelihood is greater than a predetermined threshold value or not. In a case where the obtained likelihood is greater than a predetermined threshold value, it is determined that the vehicle model of vehicle 21 is registered in first database DB1, and in a case where the obtained likelihood is equal to or less than the predetermined threshold value, it is determined that the vehicle model of vehicle 21 is not registered in first database DB1.

In a case where it is determined that the vehicle model of vehicle 21 is registered in first database DB1 (step ST104: Yes), the process proceeds to step ST105, and in a case where it is determined that the vehicle model of vehicle 21 is not registered in first database DB1 (step ST104: No), the process proceeds to step ST107.

In step ST105, the identification process of the vehicle model of vehicle 21 (a first vehicle model identification process) is performed on the basis of the front feature amount which is acquired from the front image. Specifically, the similarity between the front feature amount acquired from the front image and the front feature amount stored in first database DB1 is calculated. The similarity is calculated as a score, and a vehicle model having the highest score among the calculated scores is identified as the vehicle model of vehicle 21.

After the first vehicle model identification process in step ST105 is ended, the vehicle model of vehicle 21 which is an identification result is stored in storage unit 14 (step ST106), and then the process is ended. The identification result stored in storage unit 14 is displayed on display unit 12, or output to an external system such as an external security system or a management system, according to a desire.

In step ST107, an image of component 23 (hereinafter, referred to as "component image") included in front portion 22 is extracted from the front image. The component image is extracted for each component. The extraction of the component image may be performed by using a known method of the related art, similarly to the case where the front image is extracted from the captured image. For example, the extraction of the component may be performed by using a component detector which is installed by a previous machine learning for a feature (for example, an appearance such as a shape) of the component, for each component.

Subsequently, in step ST108, a feature amount of component 23 (hereinafter, referred to as "component feature amount") is acquired from the component image. The acquisition of the component feature amount may be performed by using a known technique of a local feature amount of the related art, such as a dense shift or an HOG, similarly to the case where the front feature amount is acquired.

Next, in step ST109, for each component, the similarity is determined. Specifically, the similarity between the component feature amount acquired from the component image and the component feature amount stored in second database DB2 is calculated as a score.

In step ST110, the identification process of the vehicle model of vehicle 21 (a second vehicle model identification process) is performed, on the basis of the similarity (score) calculated in step ST109. The identification process may be performed by any one of the following identification methods (1) to (4).
(1) A component having the highest score among all components stored in second database DB2 and a vehicle model corresponding to the component are set as the identification result. For example, in a case where a score of a front grill is the highest among all components stored in second database DB2 and a vehicle model corresponding to the front grill is A, the vehicle model of vehicle 21 is identified as A. In a case where the identification result is displayed on display unit 12, as illustrated in FIG. 5A, "component: front grill, vehicle model: A" is displayed. Therefore, it is possible to identify the vehicle model of vehicle 21, on the basis of the feature amount of component 23 included in front portion 22. In a case of No in ST104, it is highly possible that vehicle 21 is a new vehicle model (that is, a recently released vehicle model and is not registered in first database DB1). According to the present disclosure, even in this case, it is possible to notify a user of vehicle model identification device 2 that vehicle 21 is partially similar to the existing vehicle model. The point that vehicle 21 is partially similar to the existing vehicle model becomes resources for estimating that vehicle 21 is a succeeding vehicle model of the existing vehicle model, or the like. Even in a case where vehicle 21 is a new vehicle model, by notifying to a user that vehicle 21 is partially similar to the existing vehicle model, it is possible for the user estimate a vehicle model corresponding to vehicle 21 from a somewhat limited range.
(2) A component of which a score is greater than a predetermined threshold value among all components stored in second database DB2 and a vehicle model corresponding to the component are set as the identification result. For example, in a case where the number of components of which a score is greater than a predetermined threshold value is five among all components stored in second database DB2, all of the five components and vehicle models corresponding to each of the components are exemplified. In a case where the identification result is displayed on display unit 12, as illustrated in FIG. 5B, "component: turn indicator, vehicle model: E", "component: bumper, vehicle model: B", "component: headlight, vehicle model: A", "component: front grill, vehicle model: A", and "component: headlight, vehicle model: E" are displayed. Therefore, it is possible to identify the vehicle model having high possibility that the vehicle model corresponds to vehicle 21, on the basis of the feature amount of component 23 included in front portion 22. In the example of FIG. 5B, as the vehicle model having high possibility that the vehicle model corresponds to vehicle 21, three vehicle models of E, B, and A are identified. Therefore, it is possible to estimate that the vehicle model of vehicle 21 is any one of E, B and A with high possiblity.
(3) A vehicle model is identified for each component, and, for each component, a component having the highest score among all components stored in second database DB2 and a vehicle model corresponding to the component are set as the identification result. For example, in a case where a vehicle model corresponding to a headlight having the highest score among all headlights is A, a vehicle model corresponding to a front grill having the highest score among all front grills is A, and a vehicle model corresponding to a bumper having the highest score among all bumpers is D, a vehicle model for a headlight is identified as A, a vehicle model for a front grill is identified as A, a vehicle model for a bumper is identified as D. In a case where the identification result is displayed on display unit 12, as illustrated in FIG. 5C, "component: headlight, vehicle model: A", "component: front grill, vehicle model: A", and "component: bumper, vehicle model: D" are displayed. Therefore, it is possible to identify the vehicle model, for each component 23, on the basis of the feature amount of component 23 included in front portion 22. In the example of FIG. 5C, the vehicle model of the headlight and the front grill is identified as A, and the vehicle model of the bumper is identified as D. Therefore, it is possible to estimate that it is highly possible that the vehicle model of vehicle 21 is A or D.
(4) In a case where a manufacturer of a vehicle model including a component is identified, for each component, with reference to second database DB2, and it is estimated that vehicle 21 is manufactured by a specific manufacturer on the basis of the identification result, a manufacturer name thereof is set as the identification result. Specifically, in a case where the number of manufacturers of a vehicle model estimated for each component is equal to or greater than a predetermined number, the manufacturer name thereof is set as the identification result. In addition, in a case where manufacturers corresponding to a plurality of components of which scores are from the top to a predetermined ranking are equal to one another, the manufacturers may be set as the identification result. For example, in a case where a predetermined ranking is up to third, and manufacturers corresponding to three components having the first to third highest scores are the same as manufacturers corresponding to a plurality of components, the manufacturers are set as the identification result. In this case, as illustrated in FIG. 5D, "component: headlight, vehicle model: A, manufacturer: Y company", "component: turn indicator, vehicle model: E, manufacturer: Y company", and "component: bumper, vehicle model: B, manufacturer: Y company" are displayed. Therefore, it is possible to identify the manufacturer of the vehicle model including component 23, on the basis of the feature amount of component 23 included in front portion 22. In the example of FIG. 5D, each of all manufacturers corresponding to the components having the highest first to third is Y company. Therefore, it is possible to identify the manufacturer of vehicle 21 is Y company.

After the second vehicle model identification process is ended in step ST110, the process proceeds to step ST106. In step ST106, the identification result by using the above described (1) to (4) identification methods is stored in storage unit 14, and then the process is ended. The identification result stored in storage unit 14 is displayed on display unit 12, or output to an external system such as an external security system or a management system, according to a desire. In the examples of FIGs. 5A to 5C, only the component and the vehicle model are displayed, but the manufacturer also may be displayed.

As described above, according to the present exemplary embodiment, even in a case it is impossible to identify the vehicle model of vehicle 21 by the identification process on the basis of the feature amount of front portion 22 of vehicle 21 (the first vehicle model identification process), it is possible to identify or estimate the vehicle model of vehicle 21 by the identification process on the basis of the feature amount of component 23 which is included in front portion 22 (second vehicle model identification process). Therefore, it is possible to identify or estimate a vehicle model of a vehicle even for a vehicle of which vehicle model identification data is not registered in a database on the basis of a feature amount of a front portion of the vehicle, such as a new model vehicle.

In the present exemplary embodiment, in a case where it is impossible to identify the vehicle model of vehicle 21 by the first vehicle model identification process, the second vehicle model identification process is performed. However, even in a case where it is possible to identify the vehicle model by the first vehicle model identification process, the second vehicle model identification process may be performed. Therefore, it is possible to increase precision of the vehicle model identification.

In the present exemplary embodiment, as information on the feature of the front portion and the component, the feature amount is used. However, a template image used in a template matching may be used instead of the feature amount. In this case, it is necessary to store the template image in first database DB1 and second database DB2 in advance.

Although the present disclosure has been described based on specific exemplary embodiments, these exemplary embodiments are merely examples, and the present disclosure is not limited by these exemplary embodiments. Each of the components of the vehicle model identification device, the vehicle model identification system including the same, and the vehicle model identification method according to the present disclosure described above exemplary embodiments is not necessarily indispensable for the present disclosure, but may be omitted in a selective manner without departing from the spirit of the present disclosure.

### INDUSTRIAL APPLICABILITY

The vehicle model identification device, the vehicle model identification system including the same, and the vehicle model identification method according to the present disclosure are useful as a vehicle model identification device, a vehicle model identification system including the same, a vehicle model identification method, and the like which can identify or estimate a vehicle model of a vehicle even in a case where it is impossible to identify the vehicle model on the basis of a feature amount of at least a portion of a vehicle body.

### REFERENCE MARKS IN THE DRAWINGS

- 1: VEHICLE MODEL IDENTIFICATION SYSTEM
- 2: VEHICLE MODEL IDENTIFICATION DEVICE
- 11: CAMERA (IMAGING DEVICE)
- 12: DISPLAY UNIT
- 13: INPUT UNIT
- 14: STORAGE UNIT
- 15: PROCESSOR
- 16: BUS
- 21: VEHICLE
- 22: FRONT PORTION
- 23: COMPONENT
- DB1: FIRST DATABASE
- DB2: SECOND DATABASE

## Claims

1. A vehicle model identification device which identifies a vehicle model of a vehicle on the basis of a captured image of the vehicle which is captured by an imaging device, the vehicle model identification device comprising:
a first database that stores information on a feature of at least a portion of a vehicle body of each of a plurality of vehicle models, for each of the vehicle models;
a second database that stores information on a feature of a component which is included in at least the portion of the vehicle body of each of the vehicle models, for each of the vehicle models; and
a processor that performs a first vehicle model identification process of extracting the information on the feature of at least the portion of the vehicle body of the vehicle from the captured image and identifying the vehicle model of the vehicle with reference to the first database on the basis of the extracted information on the feature of at least the portion of the vehicle body, and a second vehicle model identification process of extracting the information on the feature of the component which is included in at least the portion of the vehicle body from the captured image and identifying the vehicle model of the vehicle with reference to the second database on the basis of the extracted information on the feature of the component,
wherein at least in a case where identifying the vehicle model of the vehicle by the first vehicle model identification process is impossible, the processor performs the second vehicle model identification process.

2. The vehicle model identification device of Claim 1,
wherein the information on the feature of the component is a feature amount of the component.

3. The vehicle model identification device of Claim 2,
wherein in the second vehicle model identification process, a similarity between a feature amount of the component which is extracted from the captured image and a feature amount of the component which is stored in the second database, is calculated, and the vehicle model of the vehicle is identified with reference to the second database on the basis of the calculated similarity.

4. The vehicle model identification device of Claim 3,
wherein in the second vehicle model identification process, a vehicle model corresponding to a component of which the similarity is the highest among the components stored in the second database, is set as an identification result.

5. The vehicle model identification device of Claim 3,
wherein in the second vehicle model identification process, a vehicle model corresponding to a component of which the similarity is greater than a predetermined threshold value among the components stored in the second database, is set as an identification result.

6. The vehicle model identification device of Claim 3,
wherein in the second vehicle model identification process, the vehicle model for each of the components is identified, and a vehicle model corresponding to a component of which the similarity is the highest among the components stored in the second database, is set as an identification result for each of the components.

7. The vehicle model identification device of Claim 3,
wherein the second database further stores a manufacturer of the vehicle model having the component, and
in the second vehicle model identification process the manufacturer of the vehicle model having the component for each of the components is identified, and in a case where the number of the manufacturers of the vehicle model which is identified for each of the components is equal to or greater than a predetermined number, a name of the manufacturers of the vehicle model is set as an identification result.

8. A vehicle model identification system comprising:
the vehicle model identification device of any one of Claims 1 to 7; and
an imaging device that images a vehicle.

9. A vehicle model identification method of identifying a vehicle model of a vehicle on the basis of a captured image of the vehicle which is captured by an imaging device, the method comprising:
a step of preparing a first database that stores information on a feature of at least a portion of a vehicle body of each of a plurality of vehicle models, for each of the vehicle models, and a second database that stores information on a feature of a component which is included in at least the portion of the vehicle body of each of the vehicle models, for each of the vehicle models;
a step of extracting the information on the feature of at least the portion of the vehicle body of the vehicle from the captured image and identifying the vehicle model of the vehicle with reference to the first database on the basis of the extracted information on the feature of at least the portion of the vehicle body; and
a step of extracting the information on the feature of the component which is included in at least the portion of the vehicle body from the captured image and identifying the vehicle model of the vehicle with reference to the second database on the basis of the extracted information on the feature of the component, at least in a case where identifying the vehicle model of the vehicle by the first vehicle model identification process is impossible.
